# EUROPEAN PATENT SPECIFICATION

(11) **EP 0 441 786 B1**
(45) Date of publication and mention of the grant of the patent: **04.10.1995**
(21) Application number: 89908551.8
(22) Date of filing: 13.07.1989
(51) Int. Cl.: C01D 3/04, A23L 1/237

(54) **SALT PRODUCT AND METHOD FOR ITS PREPARATION**
SALZERZEUGNIS UND VERFAHREN ZUR HERSTELLUNG
PRODUIT SALIN ET PROCEDE DE PREPARATION CORRESPONDANT

(30) Priority: 15.07.1988 SE 8802635
(43) Date of publication of application: 21.08.1991
(73) Proprietor: AB HANSON & MÖHRING, S-301 04 Halmstad (SE)
(72) Inventor: SUNDSTRÖM, Yngve, S-417 22 Göteborg (SE)
(74) Representative: Rostovanyi, Peter
(86) International application number: SE8900410
(87) International publication number: WO9000522

(56) References cited:
- WO-A-85/02324
- SE-B- 0 440 019
- US-A- 4 473 595
- PATENT ABSTRACTS OF JAPAN, vol. 9, no 1 (C-259), 04 September 1984

## Description

The present invention relates to a sodium-reduced salt for use in food, NaCl being wholly or partly replaced by double salts of potassium and magnesium.

Common salt, or sodium chloride, is the additive most frequently used in ordinary cooking, as well as in large scale preparation of food. Man, like other warm-blooded animals, needs a certain intake of sodium ions and chloride ions, but this intake is usually much larger than the minimum required to compensate for inevitable losses.

To people with certain illnesses, e.g. those denoted by the generic term "high blood-pressure", a large intake of salt is considered injurious. Moreover, it is feared that too large an intake of sodium ions may result in an unbalance between the ions in the body fluids so that especially the proportions of sodium to potassium are disturbed.

To control the intake of salt, it has therefore been proposed to use various salt combinations in which sodium chloride has been partly replaced by other salts, primarily potassium chloride.

Replacing sodium chloride by other chemical compounds entails several disadvantages, e.g. a deterioration in taste, which is basically inevitable since only sodium chloride can produce the sensation of a "salty" taste. Additives which conceal or disguise the different taste of the common salt substitute, may bring an improvement, but the approved additives to food are very few, the most common one being magnesium sulphate.

A further complication is that, when a number of pulverulent compounds are intermixed, the mixture may easily become inhomogeneous, especially when it consists of grains of different sizes and densities and is dispensed from a caster. This may produce unexpected and unsuitable taste sensations. Storing over longer periods of time may also cause stratification in the product, thus increasing the inhomogeneity.

Sodium chloride often affects other food qualities than taste. By bonding water, it may have a preserving effect, and it can cooperate with other substances to produce a suitable or traditional consistency. In these cases as well, the replacement of common salt by other substances involves major inconveniences.

In spite of the above-mentioned difficulties, there is a considerable interest in using sodium-reduced salt not only as a complementary medication, but also for cooking.

Previously known salt products for use in food and with a reduced content of NaCl mainly consist of potassium, magnesium, calcium and, of course, sodium chloride.

Swedish Patent 7901586-3 discloses such a product which, within fixed limits in percent by weight, contains NaCl, a potassium compound, and a magnesium compound, and which is a pure mixture of its ingredients. US patent specification 1,998,179 concerns another salt mixture with fixed contents of sodium, potassium, magnesium, and calcium.

WO 85/00958 discloses a salt mixture comprising NaCl, KCl, and a magnesium salt, such as magnesium sulphate or magnesium chloride. WO 85/02324 is concerned with a salt mixture which, in order to affect the electrolyte balance in the body, comprises the ions Na⁺, K⁺, Mg²⁺ and H⁺.

US patent specification 4,068,006 discloses a salt mixture containing sodium chloride, potassium chloride, and citric acid, and US patent specification 1,160,191 concerns a specific mixture of sodium chloride and potassium chloride. DE Offenlegungsschrift 2,305,980 discloses a mineral salt preparation consisting of potassium, calcium, magnesium, and very little sodium.

Patent Abstracts of Japan Vol. 9, No. 1, abstract of JP-59-154958 discloses the formation of a salty taste agent consisting of potassium chloride coated with magnesium chloride.

All of these known salt products are pure mixtures and suffer from the above-mentioned disadvantages, thus providing the user with an inhomogeneous product.

The inconveniences of sodium-reduced salt having a given content of the ions sodium, potassium, chloride and sulphate, can however be compensated for if the sodium-reduced salt is prepared by co-crystallisation and not only by powder mixing.

One object of the present invention is to provide a salt for use in food, which can replace pure NaCl for both household and industrial use.

Another object of the invention is to provide a sodium-reduced salt which will prove more satisfactory to the user than previously known sodium-reduced salt mixtures.

A further object of the invention is to provide especially preferred methods for the preparation of the salt.

These objects are achieved by means of a salt which has the features defined in the characterising clause of claim 1. The method according to the invention for the preparation of such a salt is defined in the characterising clause of claim 6.

The invention is described in more detail below, reference being made to the accompanying drawings in which Figs 1-4 are photographs enlarged 50 times showing crystal fractions of different salt products according to the invention, and Figs 5 and 6 are photographs enlarged 50 times showing crystal fractions of two comparable prior art salts.

The salt product according to the invention may in addition contain potassium chloride and, optionally, physiologically acceptable additives.

In the context of this invention, salts for use in food also include salts for medical use, such as dietetic salts containing no sodium chloride, as well as salts for animal feed.

Under suitable conditions, so-called double salts form, in which one or more ion types are completely bonded. Carnallite, KMgCl₃.6H₂O, and kainite, KMgClSO₄.3H₂O, are examples of two such double salts which are formed comparatively easily upon crystallisation of suitable salt solutions. In powder form, these double salts taste different from a pure mixture of the salts which formally can make up the double salt in question. The taste is usually considered milder, and rather resembles the taste of common salt. Mixtures of common salt and double salt seem to taste more like common salt than conventional sodium-reduced mixtures.

The co-crystallised salt is not split up into separate components when used in powder form, which is essential to the taste sensation when the salt is sprinkled directly on food, such as slices of cucumber or tomatoes, or eggs, or when used in the form of an aqueous solution or worked into the food. Since the salt is not split up into separate components, the composition is virtually the same throughout.

Sodium chloride is the main ingredient in sodium-reduced salt, except salt for dietetic food in clinical use, but is no part of the most common double salts of natural occurrence. Suitable conditions render it nonetheless possible to make sodium chloride adhere mechanically to the other components, and suitable additives can counteract the inconveniences caused by a reduction of sodium chloride in a number of recipes in the food manufacturing industry. Thus, it is possible to maintain a satisfactory consistency for cured meats and provisions even if the conventional dosage of common salt is reduced, provided that a small amount of polymeric phosphates (pyrophosphate and metaphosphate) is added to the salt mixture used in the production.

For instance, KCl, MgCl₂.6H₂O and MgSO₄.7H₂O may serve as base compounds for the formation according to the invention of double salts.

The resulting double salts are, for example, KMgCl₃.6H₂O and KClMgSO₄.3H₂O.

Other double salts can also be formed from potassium compounds and magnesium compounds.

The amount of NaCl replaced by the above-mentioned double salts is dependent on the desired end product, i.e. whether the latter is to replace ordinary table salt, be used for salting, or serve as a dietetic salt etc. An end product according to the invention may contain 0-90% NaCl, preferably 40-80% and particularly 30-50%, by weight of the total product.

The double salt may be combined with sodium chloride as well as with potassium chloride, and various physiologically acceptable additives, such as polymeric phosphates, potassium iodide, sodium nitrite, ascorbic acid, amino acids and salts thereof, and anti-caking agents, can also be added. These additives are well known to a person skilled in the art.

The double salt content may be 10-100%, suitably 10-50%, and the content of pure KCl (i.e. not forming a part of the double salt) 0-50%, suitably 30-50%. The amount of additives is suitably 3-5%. The above-mentioned percentage rates are all by weight and based on the weight of the total mixture.

A product consisting of 15 parts by weight of carnallite, 35 parts by weight of potassium chloride, and 50 parts by weight of sodium chloride, and a product containing equal proportions of kainite, potassium chloride, and sodium chloride, constitute examples of preferred end products according to the invention.

Another preferred salt product contains about 48% NaCl, about 10% kainite, and about 42% KCl.

The double salts according to the invention can be prepared in different ways, one method being the dissolution in water, preferably boiling water, of the potassium compounds and magnesium compounds destined to form the double salt, whereupon the mixture is slowly evaporated, for example under the action of microwaves, or by means of vacuum evaporation or suchlike. The salt is recovered, and NaCl and/or KCl, together with other possible additives, are added, resulting in a salt according to the invention, comprising one or more double salts intermixed with NaCl and/or KCl.

The salt product according to the present invention can also be prepared by mixing the base compounds and heating them until they melt, which occurs at about 100-150°C. The melt is then allowed to cool, whereupon it is crushed to a fine powder.

Conventional crystallisation constitutes another alternative method for the preparation, water being boiled off until crystallisation sets in, whereupon the product is cooled.

The method for evaporation is not critical, but can be accomplished by known conventional means, whereas it naturally is of the utmost importance that the evaporation occur at a temperature at which the double salt is stable. When kainite is used, the evaporation temperature must not exceed about 70°C, while the corresponding temperature for carnallite is about 110°C.

A particularly preferred method for the preparation of a salt product according to the invention comprises suspending the double salt in a solid state, optionally together with other salts and additives in a solid state, in a saturated solution of sodium chloride and/or potassium chloride. The resulting suspension is evaporated to a suitable dry solids content, again at a temperature at which the double salt is stable, crystals of sodium chloride and/or potassium chloride adhering mechanically to the double salt crystals and forming a substantially homogeneous conglomerate. The double salt in question can be obtained by any of the above-mentioned methods, or it can be a double salt of natural occurrence.

An alternative method comprises carefully heating a double salt in a solid state, such that the water of crystallisation evaporates, whereupon the dehydrated double salt is added to a saturated solution of sodium and/or potassium, the water content of which equals the amount of evaporated water of crystallisation. The original double crystal structure is reformed, crystals of sodium chloride and/or potassium chloride adhering mechanically to the double salt crystals.

The taste of this product with crystals of sodium chloride and/or potassium chloride adhering to the double salt crystals is better than the taste of a product consisting of a pure powder mixture of double salt, NaCl, and/or KCl.

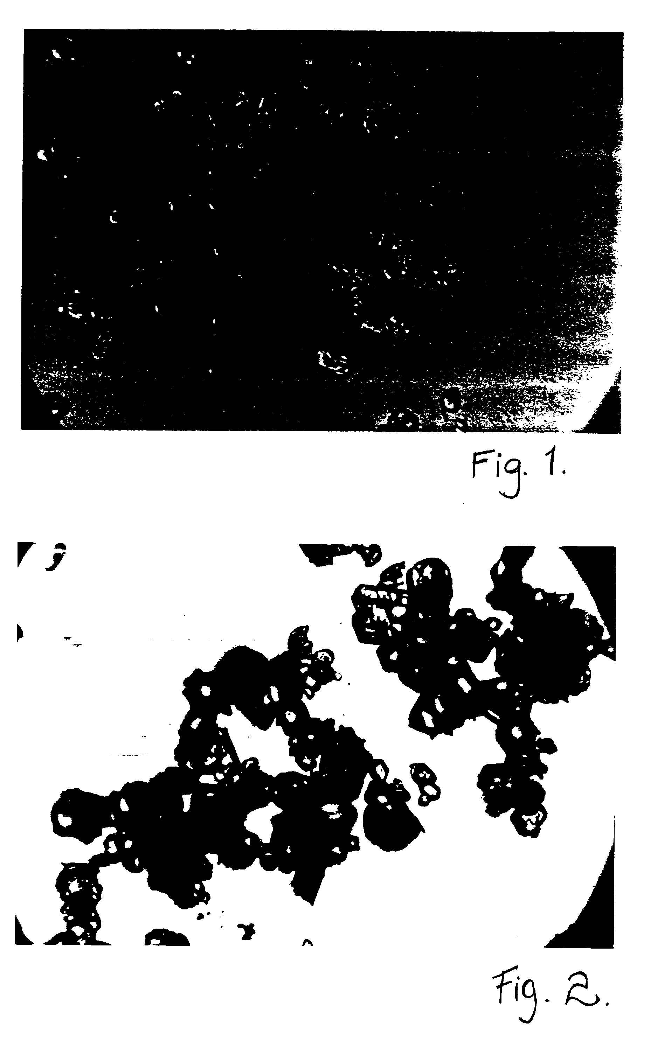

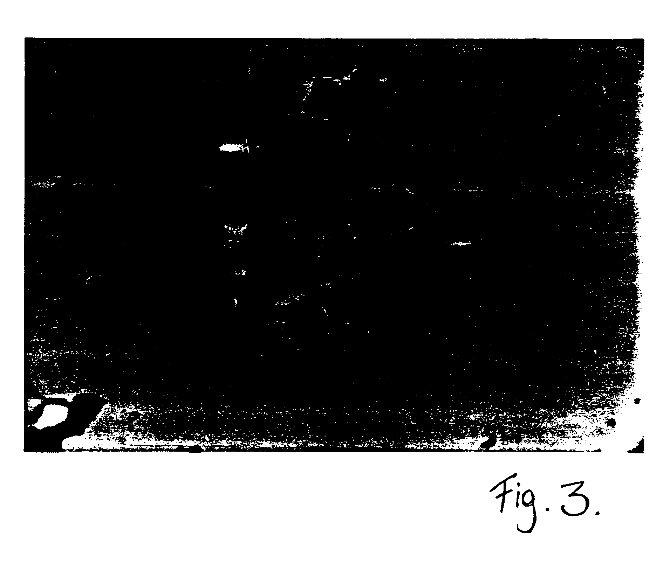

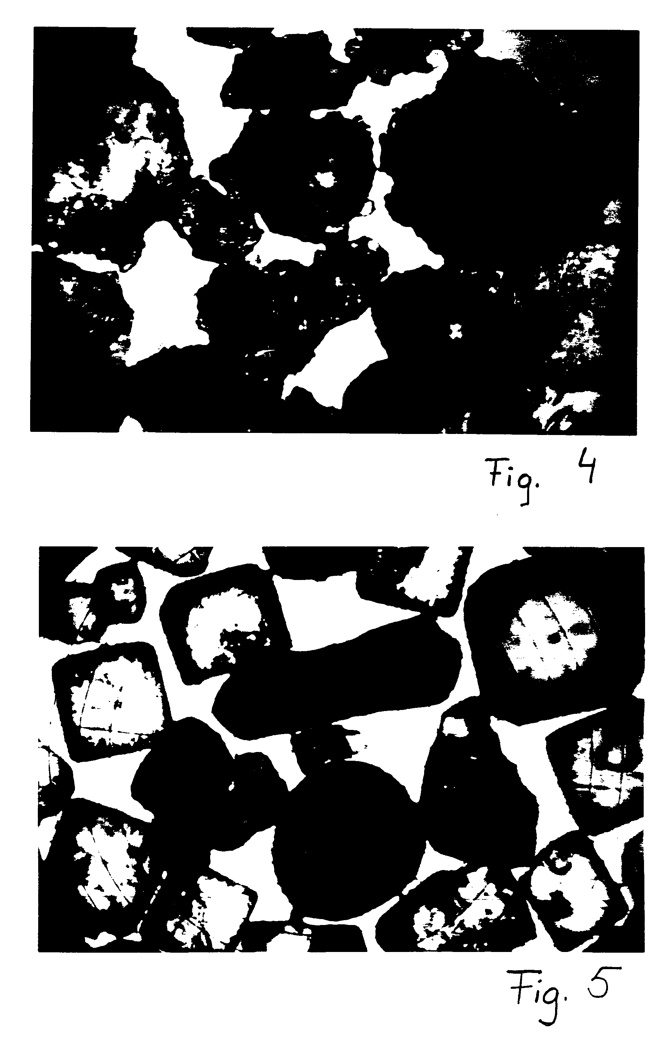

The formation of a double salt is shown in Figs 1 and 2, while the formation of a crystal conglomerate with NaCl crystals adhering to the double salt crystals, is shown in Figs 3 and 4 which are microscopical photographs enlarged 50 times of different salt products according to the invention.

Fig. 1 shows rhombic carnallite crystals which have crystallised from a solution with a large excess of magnesium chloride.

Fig. 2 shows carnallite of the same crystal fraction, heated in a microwave oven so that four out of the original six water of crystallisation molecules per mole carnallite have evaporated, which can easily be determined by weighing. As is evident, the rhombic crystal structure still remains.

Fig. 3 shows carnallite crystals in a saturated solution of sodium chloride. Here, the crystal shape is more difficult to distinguish since the grains have a coat of small cubical sodium chloride crystals.

Fig. 4 shows a salt product prepared according to the method in Example 6 and composed of 48% NaCl, 10% kainite and 42% potassium chloride. As is evident, the larger double salt crystals have a coat of smaller crystals.

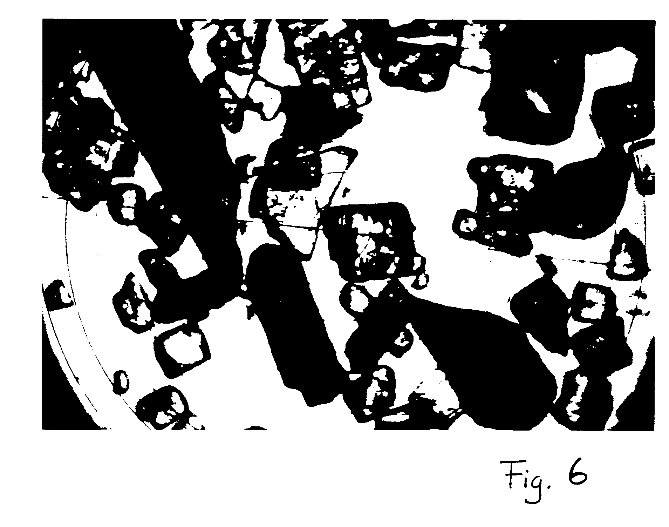

Figs. 5 and 6 show, for comparison, crystal fractions, enlarged 50 times, of two known salt mixtures with a low sodium chloride content, i.e. the mineral salt Jozo® (Fig. 5) manufactured by Akzo Salt and Basic Chemicals AB, Box 357, S-401 25 Gothenburg, and the mineral salt Seltin® (Fig. 6) manufactured by Cederroths AB, Box 715, S-194 27 Upplands Väsby.

The mineral salt Jozo® contains 60% NaCl, 35% KCl, and 3% MgSO₄ and, as can be seen from the photograph, its ingredients consist of separate crystal grains in mixture.

The mineral salt Seltin® contains 65% NaCl, 25% KCl, and 10% MgSO₄.7H₂O and, as is evident from the photograph, is a mixture of crystals unequal in size. The oblong crystals are MgSO₄.7H₂O.

The invention is further illustrated by the following, non-limiting Examples.

### EXAMPLE 1

Carnallite (from Example 1) is heated, and water of crystallisation evaporates, as is evidenced by the resulting decrease in weight. 1 mole carnallite (206 g) having thus lost four moles of water of crystallisation, is mixed with 650 g potassium chloride and 900 g sodium chloride. 96 g (81 ml) of a saturated aqueous solution of sodium chloride having a water content equal to the amount of water eliminated from the admixed carnallite, is added to the thoroughly mixed crystal powder. When the water reforms normal carnallite, an intimate mixture of carnallite and sodium chloride is obtained which is of a better quality for aromatic salting than a pure powder mixture. Product analysis: Na 19.7% (corresponding to 50% NaCl), K 20.5%, Mg 1.3%.

### EXAMPLE 2

There is added 20 g pulverised carnallite and 10 g pulverised potassium chloride to 400 g (338 ml) of a saturated solution of sodium chloride (corresponding to 100 g NaCl). The mixture is evaporated to dryness, until the weight is reduced from 430 g to 130 g. The resulting crystal cake is crushed and screened.

### EXAMPLE 3

In a circulating flow crystalliser ("Magma Crystallizer") 150 g of separately produced kainite, 630 g potassium chloride, and 150 g sodium chloride are suspended in 5 litres of a saturated aqueous solution of sodium chloride. The mixture is kept at a reduced pressure and 60°C, until 1700 g water has evaporated, which corresponds to a precipitation of an additional 570 g sodium chloride. The crystal mass is separated, dried with hot air in a drying drum, and screened. Product analysis: Na 18.9% (corresponding to 48% NaCl), K 23.6%, Mg 1.0%. (The microphotograph of the product shows a crystal conglomerate, and an X-ray crystallographic test shows that magnesium is present as kainite.)

The following Examples relate to samplings by taste involving a salt according to the invention, prior art salt mixtures with a low content of sodium chloride, and a pure sodium chloride salt.

The salt according to the invention is the one described in Example 3 and shown in Fig. 4, and the prior art salts comprise the above-mentioned mineral salts Jozo®, and Seltin®, as well as Falksalt® (commercially available from AB Hanson & Möhring, Sweden) which consists of pure NaCl to which iodine has been added.

### EXAMPLE 4

Falksalt® and the mineral salts Seltin® and Jozo® were compared by sampling with the salt product according to the invention. The sampling was carried out at Nordfalks AB, Box 63, S-431 21 Mölndal, and the panel consisted of ten samplers.

The test was carried out in 3 different rounds:

| | |
|---|---|
| 1. Salt water | 6 g/1000 g water |
| 2. Neutral, mashed potatoes | 10 g/1000 g potatoes |
| 3. Hard-boiled eggs | 10 g/1000 g eggs |

The following results were obtained with a scoring of 1-5, 1 denoting the worst taste and 5 the best taste. Every value is an average of the figures from all the ten samplers.

| TEST 1 | |
|---|---|
| Falksalt® | 2.9 points |
| Salt according to the invention | 3.0 points |
| Mineral salt Seltin® | 2.4 points |
| Mineral salt Jozo® | 2.4 points |

| TEST 2 | |
|---|---|
| Falksalt® | 3.7 points |
| Salt according to the invention | 3.2 points |
| Mineral salt Seltin® | 2.6 points |
| Mineral salt Jozo® | 2.7 points |

| TEST 3 | |
|---|---|
| Falksalt® | 3.3 points |
| Salt according to the invention | 3.8 points |
| Mineral salt Seltin® | 2.4 points |
| Mineral salt Jozo® | 3.2 points |

As is apparent from the results, the salt according to the invention compares favourably as to taste with prior art sodium-reduced salts, especially in view of the fact that the mineral salts Jozo® and Seltin® contain 60% and 65%, respectively, of NaCl, whereas the tested salt according to the invention only contains 48% NaCl and is an excellent substitute for pure NaCl.

### EXAMPLE 5

Another sampling by taste, the mineral salts Jozo® and Seltin®, and common salt were compared with the salt product according to the invention. The sampling was made by forty-two test persons from the KF consumer panel for testing food products (KF = the Swedish Cooperative Union and Wholesale Society), Kooperativa Förbundet, Box 15200, S-104 65 Stockholm.

The test involved baked egg, and 7.8 g mineral salt or common salt were used together with 5 dl milk and 6 eggs.

The following result was obtained with a scoring of 1-9, 1 denoting the worst taste and 9 the best taste. The values are average values.

| Test | Average scoring |
|---|---|
| Mineral salt Jozo® | 7.6 |
| Mineral salt Seltin® | 7.5 |
| Common salt | 8.0 |
| Salt according to the invention | 7.4 |

### EXAMPLE 6

In yet another sampling by taste, the mineral salts Jozo® and Seltin® were compared with the salt product according to the invention. The sampling was executed by forty-six test persons from the consumer panel at the ICA test kitchen.

The test involved salt in baked egg (52 g eggs, 100 ml milk brought to the boil, 1 g salt), as well as salt directly sprinkled on a slice of tomato or cucumber (1 slice of tomato or cucumber, 100 mg salt).

The following average values were obtained with a scoring of 1-9, 1 denoting the worst taste and 9 the best taste.

| Taste in baked egg test | Average scoring |
|---|---|
| Mineral salt Jozo® | 6.8 |
| Mineral salt Seltin® | 6.7 |
| Salt according to the invention | 6.7 |

| Taste on vegetable test | Average scoring |
|---|---|
| Mineral salt Jozo® | 6.5 |
| Mineral salt Seltin® | 6.4 |
| Salt according to the invention | 6.4 |

## Claims

1. Salt for use in food, **characterised** in that it contains
one or more double salts of potassium compounds and magnesium compounds;
sodium chloride and/or potassium chloride, where the crystals of sodium chloride and/or potassium chloride are adhered mechanically to the double salt crystals; and,
optionally, physiologically acceptable additives.

2. Salt as claimed in claim 1, wherein it contains 0-90% by weight, preferable 20-80% by weight and especially 30-50% by weight, of sodium chloride.

3. Salt as claimed in any one of the preceding claims, wherein the double salt is a double salt of potassium chloride and magnesium chloride or magnesium sulphate.

4. Salt as claimed in any one of the preceding claims, wherein it contains one or more of the following additives: potassium iodide, sodium nitrite, ascorbic acid, amino acids and salts thereof, and anti-caking agents.

5. Salt as claimed in any one of the preceding claims, wherein a small amount of polymeric phosphates, preferably pyrophosphates, has been added to the salt.

6. Method for the preparation of a salt for use in food, containing one or more double salts of potassium compounds and magnesium compounds, sodium chloride and/or potassium chloride, and, optionally, physiologically acceptable additives, **characterised** by:
a) dissolving suitable potassium compounds and magnesium compounds in water to form a mixture,
b) evaporating the resulting mixture to form a double salt comprising water of crystallisation, the evaporation occuring at a temperature at which the double salt is stable,
c) suspending the double salt from step b), or a double salt of natural occurrence and in a solid state, optionally together with other salts and additives in a solid state, in a saturated solution of sodium chloride and/or potassium chloride,
d) evaporating the resulting suspension to a suitable dry solids content at a temperature at which the double salt is stable, crystals of sodium chloride and/or potassium chloride adhering mechanically to the double salt crystals, and
e) extracting the salt.

7. Method as claimed in claim 6, wherein the double salt from step b), or a double salt of natural occurrence and in a solid state, optionally together with other salts and additives in a solid state, is carefully heated so that the water of crystallisation evaporates, while the crystal structure is maintained, and the dehydrated double salt is added to a saturated solution of sodium and/or potassium chloride, the water content of which is equal to the amount of evaporated water of crystallisation, crystals of sodium chloride and/or potassium chloride adhering mechanically to the double salt crystals.

## Patentansprüche

1. Salz zur Verwendung in Lebensmitteln, dadurch gekennzeichnet, daß es enthält:
ein oder mehrere Doppelsalze von Kaliumverbindungen und Magnesiumverbindungen;
Natriumchlorid und/oder Kaliumchlorid, wobei die Kristalle von Natriumchlorid und/oder Kaliumchlorid mechanisch an den Doppelsalzkristallen haften; und
optional physiologisch akzeptable Additive.

2. Salz nach Anspruch 1, in welchem 0-90 Gewichts-%, vorzugsweise 20-80 Gewichts-% und insbesondere 30-50 Gewichts-% Natriumchlorid enthalten ist.

3. Salz nach einem der vorhergehenden Ansprüche, in dem das Doppelsalz ein Doppelsalz von Kaliumchlorid und Magnesiumchlorid oder Magnesiumsulfat ist.

4. Salz nach einem der vorhergehenden Ansprüche, in dem eines oder mehrere der folgenden Additive enthalten ist: Kaliumiodid, Natriumnitrit, Ascorbinsäure, Aminosäuren und deren Salze, und Stabilisatoren.

5. Salz nach einem der vorhergehenden Ansprüche, in welchem eine kleine Menge von polymeren Phosphaten, vorzugsweise Pyrophosphaten, dem Salz zugefügt worden ist.

6. Verfahren zur Herstellung eines Salzes zur Verwendung in Lebensmitteln, das ein oder mehrere Doppelsalze von Kaliumverbindungen und Magnesiumverbindungen, Natriumchlorid und/oder Kaliumchlorid, und optional physiologisch akzeptable Additive enthält, gekennzeichnet durch:
a) Auflösen geeigneter Kaliumverbindungen und Magnesiumverbindungen in Wasser zur Bildung einer Mischung,
b) Eindampfen der resultierenden Mischung zur Bildung eines Kristallwasser enthaltenden Doppelsalzes, wobei das Eindampfen bei einer Temperatur erfolgt, bei der das Doppelsalz stabil ist,
c) Suspendieren des Doppelsalzes aus dem Schritt b) oder eines natürlich vorkommenden Doppelsalzes in festem Zustand optional zusammen mit anderen Salzen und Additiven in festem Zustand in einer gesättigten Lösung aus Natriumchlorid und/oder Kaliumchlorid,
d) Eindampfen der resultierenden Suspension zu einem geeigneten Feststoffgehalt bei einer Temperatur, bei der das Doppelsalz stabil ist, wobei Kristalle von Natriumchlorid und/oder Kaliumchlorid mechanisch an den Doppelsalzkristallen haften, und
e) Extrahieren des Salzes.

7. Verfahren nach Anspruch 6, bei dem das Doppelsalz aus Schritt b) oder ein natürlich vorkommendes Doppelsalz in festem Zustand optional zusammen mit anderen Salzen und Additiven in festem Zustand vorsichtig erhitzt wird, so daß das Kristallwasser verdampft, während die Kristallstruktur erhalten bleibt, und das dehydrierte Doppelsalz einer gesättigten Lösung von Natrium- und/oder Kaliumchlorid zugefügt wird, deren Wassergehalt der Menge des verdampften Kristallwassers entspricht, wobei die Kristalle von Natriumchlorid und/oder Kaliumchlorid mechanisch an den Doppelsalzkristallen haften.

## Revendications

1. Sel à utiliser dans un aliment, caractérisé en ce qu'il contient un ou plusieurs sels doubles de composés de potassium et de composés de magnésium ; du chlorure de sodium et/ou du chlorure de potassium, pour lesquels les cristaux de chlorure de sodium et/ou de chlorure de potassium sont adhérés mécaniquement aux cristaux de sels doubles ; et éventuellement des additifs physiologiquement acceptables.

2. Sel selon la revendication 1, qui contient de 0 à 90 % en masse, de préférence de 20 à 80 % en masse et surtout de 30 à 50 % en masse de chlorure de sodium.

3. Sel selon l'une quelconque des revendications précédentes, dans lequel le sel double est un sel double de chlorure de potassium et de chlorure de magnésium ou de sulfate de magnésium.

4. Sel selon l'une quelconque des revendications précédentes, qui contient un ou plusieurs des additifs suivants : iodure de potassium, nitrite de sodium, acide ascorbique, acides aminés et leurs sels et agents d'antiagglomération.

5. Sel selon l'une quelconque des revendications précédentes, dans lequel une petite quantité de phosphates polymères, de préférence pyrophosphates, a été ajoutée au sel.

6. Procédé de préparation d'un sel à utiliser dans un aliment, contenant un ou plusieurs sels doubles de composés de potassium et de composés de magnésium, du chlorure de sodium et/ou du chlorure de potassium et éventuellement des additifs physiologiquement acceptables, caractérisé par les étapes consistant à :
a) dissoudre des composés adaptés de potassium et des composés adaptés de magnésium dans l'eau pour former un mélange,
b) évaporer le mélange résultant pour former un sel double comprenant l'eau de cristallisation, l'évaporation apparaissant à une température à laquelle le sel double est stable,
c) mettre en suspension le sel double de l'étape b), ou bien un sel double d'origine naturelle et dans un état solide, éventuellement avec d'autres sels et additifs dans un état solide, dans une solution saturée de chlorure de sodium et/ou de chlorure de potassium,
d) évaporer la suspension résultante jusqu'à une teneur adaptée en solides secs à une température à laquelle le sel double est stable, les cristaux de chlorure de sodium et/ou de chlorure de potassium adhérant mécaniquement aux cristaux du sel double, et
e) extraire le sel.

7. Procédé selon la revendication 6, dans lequel le sel double de l'étape b), ou bien un sel double d'origine naturelle et dans un état solide, éventuellement avec d'autres sels et additifs dans un état solide, est soigneusement chauffé de sorte que l'eau de cristallisation s'évapore tandis que la structure cristalline est maintenue, et dans lequel le sel double déshydraté est ajouté à une solution saturée de chlorure de sodium et/ou de chlorure de potassium dont la teneur en eau est égale à la quantité d'eau de cristallisation évaporée, les cristaux de chlorure de sodium et/ou de chlorure de potassium adhérant mécaniquement aux cristaux du sel double.
